# EUROPEAN PATENT SPECIFICATION

(11) **EP 2 475 130 B1**
(45) Date of publication and mention of the grant of the patent: **01.06.2016**
(21) Application number: 11305019.9
(22) Date of filing: 07.01.2011
(51) Int. Cl.: H04L 12/24

(54) **Method and server for remotely managing a device over a network**
Verfahren und Server zur entfernten Verwaltung einer Vorrichtung über ein Netzwerk
Procédé et serveur pour gérer un dispositif à distance dans un réseau

(43) Date of publication of application: 11.07.2012
(73) Proprietor: ALCATEL LUCENT, 92100 Boulogne-Billancourt (FR)
(72) Inventor: Danisik, Bahadir, 2018, Antwerpen (BE); Cristallo, Geoffrey, 1080, Brussel (BE); Vandaele, Piet, 9040, Sint-Amandsberg (BE)
(74) Representative: ALU Antw Patent Attorneys

(56) References cited:
- US-A1- 2005 228 847
- US-A1- 2009 049 445
- US-A1- 2009 182 802
- US-A1- 2009 204 701

## Description

### Technical field of the invention

The present invention relates to the field of methods for remotely managing a device by means of a management server, whereby the device and the server are connected by means of a network.

### Background of the invention

Today systems and methods exist for performing device management over a network, for fixed and for mobile devices.

A framework has been defined for managing mobile devices, by the Open Mobile Alliance. They developed a protocol known as OMA-DM (Open Mobile Alliance - Device management). The current specification of OMA-DM is version 1.2.1, the latest modification to this version released on 17^{th} June 2008. The device management is intended to support configuration of the device, including; configuration for first time use, enabling and disabling features of said device, changing settings and parameters of the device, as well as performing software upgrades, and fault management.

Typically, in order for a Device Management Server (e.g. the Motive MDM, according to the OMA-DM framework) to perform management operations (hereafter referred to as "jobs" or "management actions"), a management session needs to be established between the Management Server (e.g. MDM) and the mobile Device (a phone, a Smartphone, an USB card/dongle, a GPS, etc).

In the mobile world, the establishment of such a management session typically requires end user (i'.e. human being) intervention. A typical example is that of an SMS being sent by the device management server (e.g. MDM) to the mobile device: a request pops up on the mobile phone screen and the end user has to explicitly approve it for the device management session to be established.

Since any process that involves an end user results in a negative end user experience, one wants to minimize the interactions with the end user, i.e. one needs to perform as many jobs within a management session, once it is established. In other words, one needs to avoid establishing a dedicated management session for each individual job that needs to be performed on the mobile device.

There is a need for methods and devices which solve the above mentioned problems.

US-A-20090204701 discloses a system in which a stateful cache layer is created at a mobile device client that tracks the state on both the mobile device and management service. The states are synchronized between the mobile device and the management service on every management session. Through the statefulness of the cache layer, unauthorized changes on the mobile device are detected and accordingly handled such as internal correction or reporting to the management service for actionable instructions. A cache layer on the management server is configured to identify organizational policy changes that affect specific devices and initiate unsolicited immediate management sessions to update the configuration to the specific devices. US-A-20090204701 does not disclose performing management action scheduling at the server, nor does it resolve the specific issue of grouping low-priority management actions with high-priority management actions.

US-A-20090182802 discloses a mobile device management system. The mobile device management system may include a device management client configured to be executed on a mobile computing device. The device management client may include a client scheduler module configured to contact a device management server via a computer network and download a device management schedule for storage on the mobile computing device. The device management schedule may be generated at the device management server and include one or more schedule items. Each schedule item may include a predefined event and an associated action. The client scheduler module may be configured to monitor the device management schedule, detect the predefined event defined in a schedule item, and perform the associated action associated with the event, to thereby configure software on the mobile computing device.

### Summary of the invention

A solution of the above mentioned problem would be to use an "event triggered job" mechanism. This mechanism could comprise the following:
- when "jobs" are defined/created, they are associated with "events"
- when a device contacts the device management server (for any reason), the device management server interprets this as an "event".
- if a "job" is associated with the corresponding "event", it is performed by the device management server on the mobile device.

However, events are asynchronous and unpredictable. If the server is under load when an event is raised, the event might be processed after the session is closed. In this case, the device management server will have to contact the device again to open a new management session.

In the mobile world, the end user is typically involved in the creation of the device management session. Too many management sessions would therefore result in a negative end user experience. Additionally, bandwidth resources are often limited in the mobile world: too many management sessions result in a poor utilization of the bandwidth and/or airtime. All event triggered jobs could be executed in the same management session once the management session is established with the mobile device, but this would however create a resource problem on the device management server.

It is an object of the present invention to provide a method and a server which solves at least one of the above problems.

According to a first aspect of the present invention, a method for remotely managing a device by means of a management server is disclosed, whereby the device and the server are connected by means of a network, the method comprising in the management server;
- receiving an event reporting message corresponding to a predetermined event relevant to settings of the device;
- selecting at least one device management action for the device based on the event; and
- performing the device management action on the device by means of a device management session between the server and the device over the network;
wherein the method further comprises determining whether the device management action is to be performed synchronously or asynchronously. Preferably, if it is determined that the device management action is to be performed asynchronously, the method comprises queuing the device management action, waiting for a trigger to set up a device management session, and upon receiving the trigger, setting up the management session and performing the queued device management action.

According to preferred embodiments, the method comprises asynchronously triggering a device management session between the management server and the device, if it is determined that the device management action is to be performed asynchronously.

According to preferred embodiments, the method comprises directly performing said device management action if a device management session is already pending, or synchronously setting up the management session and performing the device management action, if it is determined that the device management action is to be performed synchronously.

According to preferred embodiments, the trigger to set up a device management session corresponds to the arrival of a moment in time corresponding to an instance of a periodic sequence of moments in time, in which an automatic management session is set up between the management server and the device.

According to preferred embodiments, the trigger comprises the setting up between the server and the device for the purpose of performing at least one management action on the device corresponding to another, synchronous, device management action.

According to preferred embodiments, the queued asynchronous management action is performed after the synchronous management action.

According to preferred embodiments, receiving the event reporting message comprises receiving the event reporting message from the device. The device can therefore for instance send an SMS to the management server or trigger an alert mechanism.

According to preferred embodiments, receiving the event reporting message comprises receiving the event reporting message from an external system (e.g. an event sent by a billing system and captured by the management server, or an event sent by a troubleshooting system, and captured by the management server).

According to preferred embodiments, setting up a device management action between the device management server and the device, comprises sending an approval request message to the device from the server, and sending in reply an approval message to the server from the device. The approval request message can already comprise information required for performing the device management action on the device by the device.

According to preferred embodiments the device is a mobile device.

According to preferred embodiments, the device management by the device management server is performed within the context of OMA-DM.

According to preferred embodiments, the device management by the device management server is performed within the context of TR-069.

According to preferred embodiments of the present invention, the predetermined event which can be triggered by the event reporting message, corresponds to a set of at least one, but possibly a plurality of device management actions. The method can further comprise retrieving the management actions of the set which have to be performed synchronously, and performing these device management actions synchronously by performing them in a currently active device management session, or by setting up a device management action for this purpose. According to preferred embodiments these synchronous device management actions can be put in a protocol tier before being actually performed on the device in a quasi synchronous way. Instead of queuing the asynchronous jobs associated with an event, the event itself, comprising the set of jobs, can be queued and can be interrogated later on in order to retrieve the asynchronous jobs, which can then be executed according to for instance a best-effort scheme. When the asynchronous jobs are executed, they can also be put in the protocol tier. The protocol tier then schedules the performance of synchronous and asynchronous jobs according to a predetermined scheduling mechanism. Preferably, scheduling mechanisms perform the synchronous jobs before the asynchronous jobs.

According to preferred embodiments of the present invention, the method may further comprise determining whether a job or a set of jobs has to be performed for a specific device, and performing the respective jobs only if it is indeed required.

According to a second aspect of the present invention, a server is disclosed for remotely managing a device, whereby the device and the server are connected by means of a network, the server comprising;
- a means for receiving an event reporting message corresponding to a predetermined event relevant to setting of the device;
- a means for selecting at least one device management action for the device based on the event; and
- a means for performing the device management action on the device by means of a device management session between the server and the device over the network;
wherein the server further comprises
a means for determining whether the device management action is to be performed synchronously or asynchronously; and for, if it is determined that the device management action is to be performed asynchronously, queuing the device management action, waiting for a trigger to set up a device management session, and upon receiving the trigger, setting up the management session and performing the queued device management action.

According to preferred embodiments, the means for determining whether the device management action is to be performed synchronously or asynchronously is adapted for directly setting up the management session and performing the device management action, if it is determined that the device management action is to be performed synchronously.

According to a third aspect of the present invention, a data storage means is disclosed, comprising a program for performing any of the methods according to the first aspect.

Features of the first aspect are also supposed to be disclosed for the second or third aspect, mutatis mutandis, as the skilled person may recognise.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.

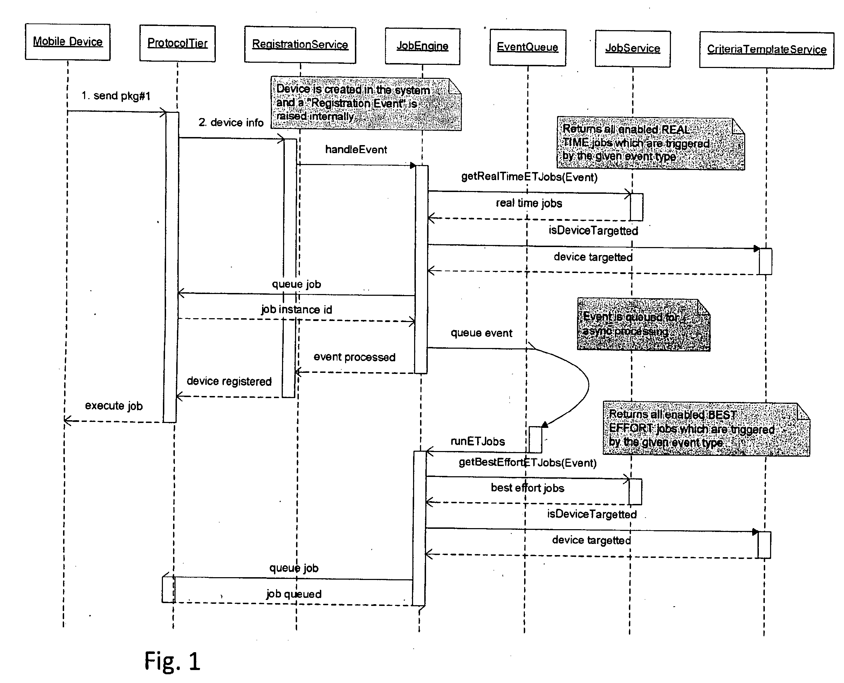

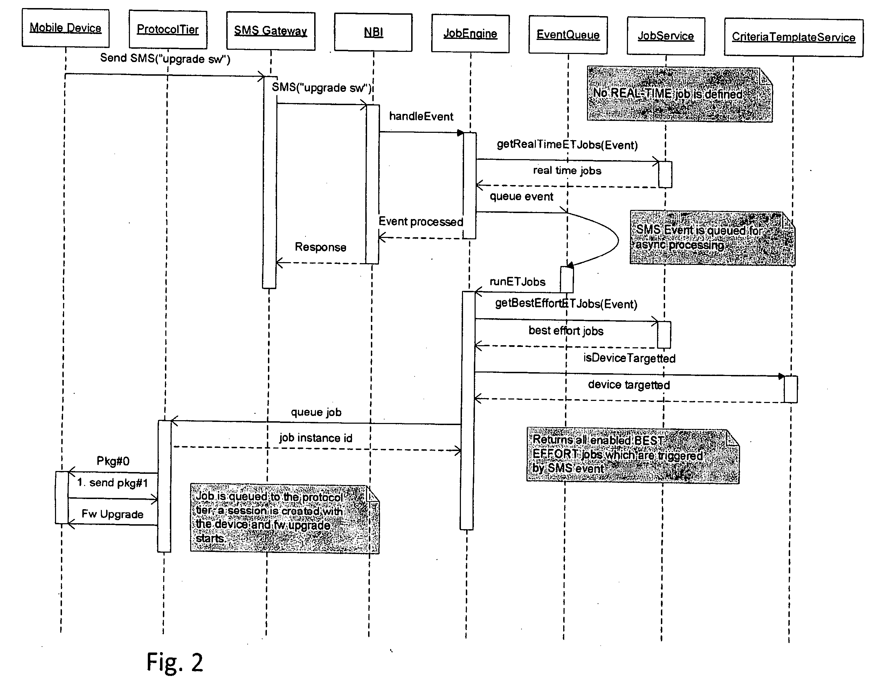

Fig. 1 and Fig.2 illustrate embodiments according to the present invention.

### Description of illustrative embodiments

The description of aspects of the present invention is performed by means of particular embodiments and with reference to certain drawings but the invention is not limited thereto. Depicted figures are only schematic and should not be considered as limiting.

In aspects of the present invention, a job execution engine is provided which is triggered by some pre-defined events in the system like a state change in the device or any notification from the device like SMS message. Events are processed in real-time (synchronous) or best-effort (asynchronous) mode. This mode is configurable when an Event Triggered job is defined in the system.

According to embodiments of the present invention, a different treatment is proposed for synchronous (real-time) and asynchronous (best-effort) event-triggered jobs.

If an event-triggered job (or device management action) needs to be executed on the same management session, the job is defined as "synchronous", so that the management server processes the event "immediately" and performs the job in the same management session as the session created by the "event". When an event is raised internally, the management server first checks if synchronous event-triggered jobs are associated with this event. If this is the case, the event is processed in a synchronous way and all the jobs associated with the event are evaluated so that, if they apply, they will be performed "immediately", within the same management session.

"Synchronous" event-triggered jobs may however have an impact in terms of performance of the device management system. Therefore, the device management server also supports the concept of "asynchronous" event-triggered jobs. These are jobs that do not necessarily need to be performed within the same management session as the "event", but can be done "at some point in time later", e.g. when the load on the server is "back to normal".

Configuring the mode allows operators to execute any job in the current session or in the next sessions. Real-time jobs are executed in the same session with the device when there is a device management session in existence. These jobs do not create unnecessary traffic with the device as there is no need to acknowledge a new session. Asynchronous jobs on the other hand works in a best-effort mode which means they are executed whenever the system is able to handle them.

According to a first example embodiment, a job for replacing DM Credentials in a device is triggered by a Registration Event. The events can for instance be application specific.

Supposing that, a mobile device is bootstrapped with a set of generic credentials in the factory and will contact to the management server when the device becomes online. Device credentials must typically be replaced whenever the device contacts to the server as they are generic credentials which are same for all devices. This typically occurs as soon as possible, as without these credentials no management sessions will be possible later on. For this operation, a "real-time" Event-Triggered Job can be defined in the system and the job contains the necessary OMA-DM commands to replace the credentials with some unique credentials. This job is triggered by the "Registration Event".

The sequence diagram of Fig.1 shows how the "synchronous" Event-Triggered job can be used to execute a job. An Event Triggered Job has already been defined in the system. This job is trigged on "Registration Event" and is a "synchronous" job. The job is preferably targeting the device based on device type. The job can be configured to execute some OMA-DM commands to replace OMA-DM credentials on the device.

The method can comprise the following steps;
1) The mobile device bootstraps the first time, sends a package#1 message to the MDM server (an example of a device management server). The generic credentials and MDM server URL is already pre-configured during manufacturing of the device.
2) A protocol tier authenticates the device with the generic credentials and hands over the device information to a registration service / registration service means for registration. A new session is created with the device. The device can for instance send OMA-DM commands over http (Hypertext Transferprotocol). A new http session/management session is hereby created after the first device message.
3) The registration service means creates the device in a data storage and raises an internal event called "Registration Event" for the device.
4) A job retrieval means, e.g. a Job Engine receives the event, and checks for "real-time" Event Triggered jobs which are triggering on "Registration Event". For instance, a single event-triggered job is returned in this example. This job is evaluated for the given device. If the device is targeted, meaning that the job should be performed on the device, then job engine submits a job instance to the protocol tier.
5) The Job Engine also raises the Registration Event to evaluate the event further asynchronously and returns to the registration service.
6) The registration service confirms that the device has been created in the system.
7) The Protocol tier checks for the job instances queued for the device. There is for instance already one job instance queued. This job (Replace DM Credentials) is executed in the current session.

Making the event triggered job as "Real-Time" guarantees that the job is executed in the current session.

A second example embodiment, illustrates how a Firmware Upgrade Job is performed when being triggered by an SMS event.

In this example, a mobile device software has to be upgraded to the latest version when the user sends an SMS message with a text "upgrade sw". An Event Triggered Job is configured in the system triggering on the respective SMS event with the message "upgrade sw". As the SMS from the mobile device does not create a management session, no management session is established when the SMS message is received by the device management server. Therefore, this job is defined as an asynchronous job.

The sequence diagram of Fig. 2 shows how the best-effort (asynchronous) Event Triggered job can be used to execute a job. An Event Triggered Job has already been created in the system. This job is for instance trigged by an "SMS Event" with a SMS message comprising the text "upgrade sw", and is a "Best-Effort" job. The job can be targeting the device based on device type. The job are preferably configured to execute some (e.g. OMA-DM) commands to upgrade the software version of the device.

The method can comprise the following steps;
1) The mobile device sends a SMS message with the text "upgrade sw" to a dial number and it is redirected to an SMS gateway;
2) The SMS gateway receives the SMS and calls the management server (e.g. MDM) northbound interface (NBI) to send the SMS message;
3) An SMS event is created from the received SMS message and the management server first checks if there are any real-time jobs existing which are triggered with the SMS event. No real-time job exists triggering with SMS event in this example. The job is then sent to the queue for asynchronous processing.
4) Depending on parameters describing the system, for instance the system load and event queue, the message is processed asynchronously and the job is executed;
5) A session is then created with the device and firmware upgrade starts.

Making the Event Triggered job "Best-Effort" gives the flexibility to the system and it is executed whenever the system can able to execute it. It can be executed immediately, or later if for instance the event queue is full.

It will be appreciated by the skilled person that it is an advantage of aspects of the present invention that with the real-time jobs, the communication overhead with the mobile device is reduced, and that jobs can be guaranteed to be executed on the same management session. Moreover the user does not need to acknowledge the multiple sessions. This improves the end user experience and optimizes the bandwidth and airtime utilization.
It will moreover be recognized that the asynchronous performing of best-effort jobs provides the advantage that the system scales better.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

## Claims

1. A method for remotely managing a device by means of a management server, whereby said device and said server are connected by means of a network, said method comprising in said management server;
- receiving an event reporting message corresponding to a predetermined event relevant to settings of said device;
- selecting at least one device management action for said device based on said.event; and
- performing said device management action on said device by means of a device management session between said server and said device over said network;
wherein said method further comprises
determining whether said device management action is to be performed synchronously or asynchronously; and, if it is determined that said device management action is to be performed asynchronously, queuing said device management action and waiting for a trigger to perform said queued device management action;
and wherein said trigger comprises the setting up of a management session between said server and said device for the purpose of performing at least one management action on said device corresponding to another, synchronous, device management action.

2. A method according to claim 1, comprising directly performing said device management action if a device management session is already pending, or synchronously setting up said management session and performing said device management action, if it is determined that said device management action is to be performed synchronously.

3. Method according to any of the previous claims, wherein said trigger to set up a device management session corresponds to the arrival of a moment in time corresponding to an instance of a periodic sequence of moments in time, in which an automatic management session is set up between said management server and said device.

4. A method according to claim 1, in which said queued asynchronous management action is performed after said other synchronous management action.

5. A method according to any of the previous claims, wherein receiving said event reporting message comprises receiving said event reporting message from said device.

6. A method according to any of the previous claims, wherein setting up a device management action between said device management server and said device, comprises sending an approval request message to said device from said server, and sending in reply an approval message to said server from said device.

7. A method according to claim 6, wherein said approval request message already comprises information required for performing said device management action on said device by said device.

8. A method according to any of the previous claims, wherein said device is a mobile device.

9. A method according claim 8, wherein said device management by said device management server is performed within the context of Open Mobile Alliance - Device Management.

10. A method according to any of the previous claims 1 to 8, wherein said device management by said device management server is performed within the context of DSL Forum Technical Report TR-069.

11. A server for remotely managing a device, whereby said device and said server are connected by means of a network, said server comprising:
- a means for receiving an event reporting message corresponding to a predetermined event relevant to setting of said device;
- a means for selecting at least one device management action for said device based on said event; and
- a means for performing said device management action on said device by means of a device management session between said server and said device over said network;
wherein said server further comprises:
a means for determining whether said device management action is to be performed synchronously or
asynchronously; and for, if it is determined that said device management action is to be performed asynchronously, queuing said device management action,
waiting for a trigger to set up a device management session, and upon receiving said trigger, performing
said queued device management action;
and wherein said trigger comprises the setting up of a management session between said server and said device for the purpose of performing at least one management action on said device corresponding to another, synchronous, device management action.

12. A server according to claim 11, wherein said means for determining whether said device management action is to be performed synchronously or asynchronously is adapted for directly setting up said management session and performing said device management action, if it is determined that said device management action is to be performed synchronously.

13. A data storage means, comprising a program for performing any of the methods according to claim 1 to 10.

## Patentansprüche

1. Verfahren zur Fernverwaltung eines Geräts mittels eines Verwaltungsservers, wobei besagtes Gerät und besagter Server mittels eines Netzwerks verbunden sind, wobei besagtes Verfahren im besagten Verwaltungsserver Folgendes umfasst:
- Empfangen einer ereignisberichtenden Nachricht, die einem vorausbestimmten Ereignis entspricht, das für Einstellungen des besagten Geräts relevant ist;
- Auswählen von mindestens einer Geräteverwaltungsaktion für besagtes Gerät basierend auf besagtem Ereignis; und
- Durchführen der besagten Geräteverwaltungsaktion am besagten Gerät mittels einer Geräteverwaltungssitzung zwischen besagtem Server und besagtem Gerät über besagtes Netzwerk;
wobei besagtes Verfahren weiterhin Folgendes umfasst:
Bestimmen, ob besagte Geräteverwaltungsaktion synchron oder asynchron durchzuführen ist; und, wenn bestimmt wird, dass besagte Geräteverwaltungsaktion asynchron durchzuführen ist, Reihen der besagten Geräteverwaltungsaktion und Warten auf einen Auslöser, um besagte gereihte Geräteverwaltungsaktion durchzuführen;
und wobei besagter Auslöser das Einrichten einer Verwaltungssitzung zwischen besagtem Server und besagtem Gerät zwecks Durchführung von mindestens einer Verwaltungsaktion am besagten Gerät entsprechend einer anderen, synchronen Geräteverwaltungsaktion umfasst.

2. Verfahren nach Anspruch 1, umfassend das direkte Durchführen der besagten Geräteverwaltungsaktion, wenn eine Geräteverwaltungssitzung bereits ansteht, oder das synchrone Einrichten der besagten Verwaltungssitzung und Durchführen der besagten Geräteverwaltungsaktion, wenn bestimmt wird, dass besagte Geräteverwaltungsaktion synchron durchzuführen ist.

3. Verfahren nach einem beliebigen der vorstehenden Ansprüche, wobei besagter Auslöser für die Einrichtung einer Geräteverwaltungssitzung der Ankunft eines Zeitpunkts entspricht, der einer Instanz einer periodischen Abfolge von Zeitpunkten entspricht, in dem eine automatische Verwaltungssitzung zwischen besagtem Verwaltungsserver und besagtem Gerät eingerichtet wird.

4. Verfahren nach Anspruch 1, wobei besagte gereihte asynchrone Verwaltungsaktion nach der besagten anderen synchronen Verwaltungsaktion durchgeführt wird.

5. Verfahren nach einem beliebigen der vorstehenden Ansprüche, wobei das Empfangen der besagten ereignisberichtenden Nachricht das Empfangen der besagten ereignisberichtenden Nachricht von besagtem Gerät umfasst.

6. Verfahren nach einem beliebigen der vorstehenden Ansprüche, wobei das Einrichten einer Geräteverwaltungsaktion zwischen besagtem Geräteverwaltungsserver und besagtem Gerät das Senden einer Zustimmungsanfragenachricht an besagtes Gerät von besagtem Server und das Zurücksenden einer Zustimmungsnachricht an besagten Server von besagtem Gerät umfasst.

7. Verfahren nach Anspruch 6, wobei besagte Zustimmungsanfragenachricht bereits Informationen umfasst, die zum Durchführen der besagten Geräteverwaltungsaktion am besagten Gerät durch besagtes Gerät erforderlich sind.

8. Verfahren nach einem beliebigen der vorstehenden Ansprüche, wobei besagtes Gerät ein Mobilgerät ist.

9. Verfahren nach Anspruch 8, wobei besagte Geräteverwaltung durch besagten Geräteverwaltungsserver im Kontext einer Open Mobile Alliance-Geräteverwaltung durchgeführt wird.

10. Verfahren nach einem beliebigen der vorstehenden Ansprüche 1 bis 8, wobei besagte Geräteverwaltung durch besagten Geräteverwaltungsserver im Kontext eines Technical Reports TR-069 des DSL Forums durchgeführt wird.

11. Server zur Fernverwaltung eines Geräts, wobei besagtes Gerät und besagter Server mittels eines Netzwerks verbunden sind, wobei besagter Server Folgendes umfasst:
- ein Mittel zum Empfangen einer ereignisberichtenden Nachricht, die einem vorausbestimmten Ereignis entspricht, das für Einstellungen des besagten Geräts relevant ist;
- ein Mittel zum Auswählen von mindestens einer Geräteverwaltungsaktion für besagtes Gerät basierend auf besagtem Ereignis; und
- ein Mittel zum Durchführen der besagten Geräteverwaltungsaktion am besagten Gerät mittels einer Geräteverwaltungssitzung zwischen besagtem Server und besagtem Gerät über besagtes Netzwerk;
wobei besagter Server weiterhin Folgendes umfasst:
ein Mittel zum Bestimmen, ob besagte Geräteverwaltungsaktion synchron oder asynchron durchzuführen ist; und, wenn bestimmt wird, dass besagte Geräteverwaltungsaktion asynchron durchzuführen ist, zum Reihen der besagten Geräteverwaltungsaktion, Warten auf einen Auslöser, um eine Geräteverwaltungssitzung einzurichten, und nach Empfang des besagten
Auslösers, Durchführen der besagten gereihten Geräteverwaltungsaktion;
und wobei besagter Auslöser das Einrichten einer Verwaltungssitzung zwischen besagtem Server und besagtem Gerät zwecks Durchführung von mindestens einer Verwaltungsaktion am besagten Gerät entsprechend einer anderen, synchronen Geräteverwaltungsaktion umfasst.

12. Server nach Anspruch 11, wobei besagtes Mittel zum Bestimmen, ob besagte Geräteverwaltungsaktion synchron oder asynchron durchzuführen ist, angepasst ist zum direkten Einrichten der besagten Verwaltungssitzung und Durchführen der besagten Geräteverwaltungsaktion, wenn bestimmt wird, dass besagte Geräteverwaltungsaktion synchron durchzuführen ist.

13. Datenspeichermittel, umfassend ein Programm zum Durchführen eines beliebigen Verfahrens nach Anspruch 1 bis 10.

## Revendications

1. Procédé de gestion à distance d'un dispositif au moyen d'un serveur de gestion, ledit dispositif et ledit serveur étant connectés au moyen d'un réseau, ledit procédé comprenant dans ledit serveur de gestion les étapes suivantes ;
- recevoir un message de notification d'événement correspondant à un événement prédéterminé relatif aux paramètres dudit dispositif ;
- sélectionner au moins une action de gestion de dispositif pour ledit dispositif sur la base dudit événement ; et
- exécuter ladite action de gestion de dispositif sur ledit dispositif au moyen d'une session de gestion de dispositif entre ledit serveur et ledit dispositif sur ledit réseau ;
ledit procédé comprenant en outre les étapes suivantes
déterminer si ladite action de gestion de dispositif doit être exécutée de manière synchrone ou asynchrone ; et, s'il est déterminé que ladite action de gestion de dispositif doit être exécutée de manière asynchrone, mettre en file d'attente ladite action de gestion de dispositif et attendre qu'un déclenchement exécute ladite action de gestion de dispositif mise en file d'attente ;
et ledit déclenchement comprenant l'établissement d'une session de gestion entre ledit serveur et ledit dispositif dans le but d'exécuter au moins une action de gestion sur ledit dispositif correspondant à une autre action de gestion de dispositif synchrone.

2. Procédé selon la revendication 1, comprenant l'exécution directe de ladite action de gestion de dispositif si une session de gestion de dispositif est déjà en cours, ou l'établissement de manière synchrone de ladite session de gestion et l'exécution de ladite action de gestion de dispositif, s'il est déterminé que ladite action de gestion de dispositif doit être exécutée de manière synchrone.

3. Procédé selon l'une quelconque des revendications précédentes, dans lequel ledit déclenchement pour établir une session de gestion de dispositif correspond à l'arrivée d'un moment correspondant à une instance d'une séquence périodique de moments, où une session de gestion automatique est établie entre ledit serveur de gestion et ledit dispositif.

4. Procédé selon la revendication 1, dans lequel ladite action de gestion asynchrone mise en file d'attente est exécutée après ladite autre action de gestion synchrone.

5. Procédé selon l'une quelconque des revendications précédentes, dans lequel la réception dudit message de notification d'événement comprend la réception dudit message de notification d'événement à partir dudit dispositif.

6. Procédé selon l'une quelconque des revendications précédentes, dans lequel l'établissement d'une action de gestion de dispositif entre ledit serveur de gestion de dispositif et ledit dispositif, comprend l'envoi d'un message de demande d'approbation audit dispositif à partir dudit serveur et l'envoi en réponse d'un message d'approbation audit serveur à partir dudit dispositif.

7. Procédé selon la revendication 6, dans lequel ledit message de demande d'approbation contient déjà des informations requises pour exécuter ladite action de gestion de dispositif sur ledit dispositif par ledit dispositif.

8. Procédé selon l'une quelconque des revendications précédentes, dans lequel ledit dispositif est un dispositif mobile.

9. Procédé selon la revendication 8, dans lequel ladite gestion de dispositif par ledit serveur de gestion de dispositif est exécutée dans le contexte d'une gestion de dispositif d'alliance mobile ouverte.

10. Procédé selon l'une quelconque des revendications précédentes 1 à 8, dans lequel ladite gestion de dispositif par ledit serveur de gestion de dispositif est exécutée dans le contexte du rapport technique TR-069 du DSL Forum.

11. Serveur de gestion à distance d'un dispositif, ledit dispositif et ledit serveur étant connectés au moyen d'un réseau, ledit serveur comprenant :
- des moyens pour recevoir un message de notification d'événement correspondant à un événement prédéterminé relatif aux paramètres dudit dispositif ;
- des moyens pour sélectionner au moins une action de gestion de dispositif pour ledit dispositif sur la base dudit événement ; et
- des moyens pour exécuter ladite action de gestion de dispositif sur ledit dispositif au moyen d'une session de gestion de dispositif entre ledit serveur et ledit dispositif sur ledit réseau ;
ledit serveur comprenant en outre :
des moyens pour déterminer si ladite action de gestion de dispositif doit être exécutée de manière synchrone ou asynchrone ; et, s'il est déterminé que ladite action de gestion de dispositif doit être exécutée de manière asynchrone, pour mettre en file d'attente ladite action de gestion de dispositif, pour attendre qu'un déclenchement établisse une session de gestion de dispositif et, dès réception dudit déclenchement, pour exécuter ladite action de gestion de dispositif mise en file d'attente ;
et ledit déclenchement comprenant l'établissement d'une session de gestion entre ledit serveur et ledit dispositif dans le but d'exécuter au moins une action de gestion sur ledit dispositif correspondant à une autre action de gestion de dispositif synchrone.

12. Serveur selon la revendication 11, dans lequel lesdits moyens pour déterminer si ladite action de gestion de dispositif doit être exécutée de manière synchrone ou asynchrone sont adaptés pour établir directement ladite session de gestion et pour exécuter ladite action de gestion de dispositif, s'il est déterminé que ladite action de gestion de dispositif doit être exécutée de manière synchrone.

13. Moyens de stockage de données, comprenant un programme pour exécuter l'un quelconque des procédés selon les revendications 1 à 10.
